(19) Europäisches Patentamt
European Patent Office
Office européen des brevets

(11) **EP 3 448 952 B1**

(12) **EUROPÄISCHE PATENTSCHRIFT**

(45) Veröffentlichungstag und Bekanntmachung des Hinweises auf die Patenterteilung:
**22.12.2021   Patentblatt 2021/51**

(21) Anmeldenummer: **17717467.9**

(22) Anmeldetag: **20.04.2017**

(51) Int Cl.:
***C09K 5/12*** *(2006.01)*

(86) Internationale Anmeldenummer:
**PCT/EP2017/059390**

(87) Internationale Veröffentlichungsnummer:
**WO 2017/186566 (02.11.2017 Gazette 2017/44)**

(54) **VERWENDUNG EINER NITRATSALZZUSAMMENSETZUNG ALS WÄRMETRÄGER- ODER WÄRMESPEICHERMEDIUM ZUR ERSTEN INBETRIEBNAHME EINER DIESE MEDIEN ENTHALTENDEN VORRICHTUNG**

USE OF A NITRATE SALT COMPOSITION AS HEAT TRANSFER OR HEAT STORAGE MEDIUM FOR STARTING THE FIRST OPERATION IN A DEVICE CONTAINING THESE MEDIA

UTILISATION D'UNE COMPOSITION DE SEL DE NITRATE EN TANT QUE CALOPORTEUR OU SUPPORT D'ACCUMULATION THERMIQUE DESTINE A LA PREMIERE MISE EN SERVICE DANS UN DISPOSITIF CONTENANT LESDITS SUPPORTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2016   EP 16167379**

(43) Veröffentlichungstag der Anmeldung:
**06.03.2019   Patentblatt 2019/10**

(73) Patentinhaber: **BASF SE**
**67056 Ludwigshafen am Rhein (DE)**

(72) Erfinder:
• **WORTMANN, Juergen**
**67056 Ludwigshafen (DE)**
• **WEIGUNY, Sabine**
**67056 Ludwigshafen (DE)**
• **FEDERSEL, Katharina**
**67056 Ludwigshafen (DE)**

• **HINRICHS, Matthias**
**67056 Ludwigshafen (DE)**
• **MAURER, Stephan**
**67056 Ludwigschafen (DE)**

(74) Vertreter: **BASF IP Association**
**BASF SE**
**G-FLP-C006**
**67056 Ludwigshafen (DE)**

(56) Entgegenhaltungen:
**EP-A1- 2 975 099     US-B1- 7 588 694**

• **THOMAS BAUER ET AL: "Overview of molten salt storage systems and material development for solar thermal power plants", WORLD RENEWABLE ENERGY FORUM, WREF 2012, 17. Mai 2012 (2012-05-17), Seiten 1-8, XP055050134, Denver**

# EP 3 448 952 B1

**Beschreibung**

Die vorliegende Erfindung betrifft ein Verfahren zur ersten Inbetriebnahme einer Vorrichtung in welcher ein solches Wärmeträger- oder Wärmespeichermedium verwendet wird, wie in den Ansprüchen definiert.

Sowohl in der chemischen Technologie als auch in der Kraftwerkstechnik sind Wärmeträgermedien oder Wärmespeichermedien auf Basis anorganischer Feststoffe, insbesondere Salzen, bekannt. Sie werden in der Regel bei hohen Temperaturen, beispielsweise jenseits von 100°C, ergo jenseits des Siedepunktes von Wasser bei Normaldruck, in geeigneten Vorrichtungen eingesetzt.

Ein Beispiel für solche Vorrichtungen in Chemieanlagen zur großtechnischen Herstellung diverser Chemikalien sind hierin und in der Fachwelt so bezeichnete "Salzbadreaktoren" die üblicherweise bei Temperaturen von ca. 200 bis 500°C betrieben werden.

Wärmeträgermedien sind Medien, die von einer Wärmequelle, beispielsweise der Sonne in solarthermischen Kraftwerken, erwärmt werden und die in ihnen enthaltene Wärmemenge über eine bestimmte Strecke transportieren. Sie können dann diese Wärme auf ein anderes Medium, beispielsweise Wasser oder ein Gas, vorzugsweise über Wärmeüberträger (auch Wärmetauscher genannt), übertragen, wobei dieses andere Medium dann beispielsweise eine Turbine antreiben kann. Wärmeträgermedien können weiterhin in der chemischen Verfahrenstechnik Reaktoren (beispielsweise Salzbadreaktoren) auf die gewünschte Temperatur aufheizen bzw. kühlen.

Wärmeträgermedien können aber auch die in ihnen enthaltene Wärmemenge auf ein anderes, sich in einem Vorratsbehälter befindliches Medium (beispielsweise Salzschmelze) übertragen und so die Wärme zur Speicherung weitergeben. Wärmeträgermedien können aber auch selbst in einen Vorratsbehälter eingespeist werden und dort verbleiben. Sie sind dann selbst sowohl Wärmeträgermedien als auch Wärmespeichermedien.

Wärmespeicher enthalten Wärmespeichermedien, üblicherweise stoffliche Zusammensetzungen, beispielsweise die erfindungsgemäßen Mischungen, die eine Wärmemenge über eine gewisse Zeit speichern können. Wärmespeicher für fluide, vorzugsweise flüssige Wärmespeichermedien werden üblicherweise durch einen festen, vorzugsweise gegen Wärmeverlust isolierten Behälter ausgebildet.

Ein noch relativ junges Anwendungsgebiet von Wärmeträgermedien oder Wärmespeichermedien sind solarthermische Kraftwerke (hierin und in der Fachwelt auch "Solarthermiekraftwerke" genannt) zur Erzeugung elektrischer Energie.

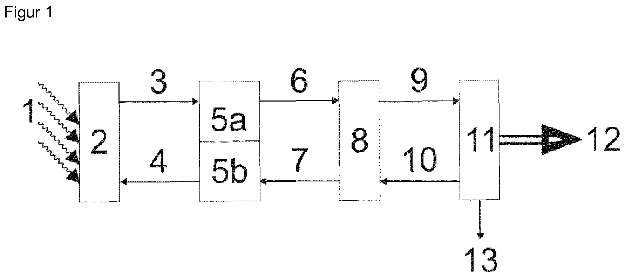

Ein Beispiel für ein solarthermisches Kraftwerk ist in Figur 1 schematisch dargestellt.

In Figur 1 haben die Ziffern die folgende Bedeutung:

1	Sonneneinstrahlung
2	Receiver
3	Strom eines erhitzten Wärmeträgermediums
4	Strom eines kalten Wärmeträgermediums
5a	Heißer Teil eines Wärmespeichersystems
5b	Kalter Teil eines Wärmespeichersystems
6	Strom eines heißen Wärmeträgermediums aus dem Wärmespeichersystem
7	Strom eines abgekühlten Wärmeträgermediums in das Wärmespeichersystem
8	Wärmeüberträger (Wärmeträger-Dampf)
9	Dampfstrom
10	Kondensatstrom
11	Turbine mit Generator und Kühlsystem
12	Strom elektrischer Energie
13	Abwärme

In einem solarthermischen Kraftwerk heizt gebündelte Sonnenstrahlung (1) ein Wärmeträgermedium, üblicherweise in einem Receiversystem (2) auf, das üblicherweise aus einer Kombination rohrförmiger "Receiver" besteht. Das Wärmeträgermedium fließt, üblicherweise durch Pumpen getrieben, in der Regel zunächst in ein Wärmespeichersystem (5a), fließt über die Leitung (6) von dort aus weiter zu einem Wärmeüberträger (8) (umgangssprachlich auch als "Wärmetauscher" bezeichnet), wo es seine Wärme an Wasser abgibt, somit Dampf erzeugt (9), der eine Turbine (11) antreibt, die schließlich, wie in einem konventionellen Elektrizitätskraftwerk, einen Generator zur Erzeugung von elektrischer Energie antreibt. Bei der Erzeugung von elektrischer Energie (12) verliert der Dampf Wärme (13) fließt dann in der Regel als Kondensat (10) in den Wärmeüberträger (8) zurück. Das abgekühlte Wärmeträgermedium fließt vom Wärmeüberträger (8) in der Regel über den kalten Bereich (5b) eines Wärmespeichersystems zu dem Receiversystem (2) zurück, in welchem es erneut durch die Sonnenstrahlung aufgeheizt wird und ein Kreislauf entsteht.

Das Speichersystem kann dabei aus einem heißen (5a) und einem kalten (5b) Tank bestehen, beispielsweise als zwei getrennte Gefäße. Eine alternative Konstruktion eines geeigneten Speichersystems ist beispielsweise ein Schichtenspeicher mit einem heißen Bereich (5a) und einem kalten Bereich (5b), beispielsweise in einem Gefäß.

Näheres zu solarthermischen Kraftwerken wird zum Beispiel in Bild der Wissenschaft, 3, 2009, Seiten 82 bis 99 bzw. im Folgenden beschrieben.

Drei Typen von solarthermischen Kraftwerken sind derzeit besonders wichtig: Das Parabolrinnenkraftwerk, das Fresnel-Kraftwerk und das Turmkraftwerk.

Im Parabolrinnenkraftwerk wird die Sonnenstrahlung via parabolisch geformter Spiegelrinnen in die Brennlinie der Spiegel fokussiert. Dort befindet sich ein Rohr (üblicherweise als "Receiver" bezeichnet), das mit einem Wärmeträgermedium gefüllt ist. Das Wärmeträgermedium wird durch die Sonnenstrahlung aufgeheizt und strömt zum Wärmeüberträger, wo es seine Wärme, wie oben beschrieben, zur Dampferzeugung abgibt. Das Parabolrinnen-Rohrsystem kann in derzeitigen solarthermischen Kraftwerken eine Länge von über 100 Kilometer erreichen.

Im Fresnel-Kraftwerk wird die Sonnenstrahlung mit in der Regel flachen Spiegeln in eine Brennlinie fokussiert. Dort befindet sich ein Rohr (üblicherweise als "Receiver" bezeichnet), das von einem Wärmeträgermedium durchströmt ist. Im Gegensatz zum Parabolrinnenkraftwerk werden der Spiegel und das Rohr nicht gemeinsam dem Sonnenstand nachgeführt, sondern die Stellung der Spiegel wird relativ zum fest verlegten Rohr verstellt. Die Spiegelstellung folgt der Position der Sonne so, dass die feste Rohrleitung immer in der Brennlinie der Spiegel liegt. Auch in Fresnel-Kraftwerken kann geschmolzenes Salz als Wärmeträger eingesetzt werden. Salz-Fresnel-Kraftwerke befinden sich derzeit weitgehend noch in der Entwicklung. Die Dampferzeugung, bzw. die Erzeugung elektrischer Energie erfolgt beim Salz-Fresnelkraftwerk analog zum Parabolrinnenkraftwerk.

Beim solarthermischen Turmkraftwerk (im Folgenden auch "Turmkraftwerk" genannt) ist ein Turm von Spiegeln, in der Fachwelt auch als "Heliostaten" bezeichnet, umringt, die die Sonnenstrahlung auf einen sogenannten zentralen Receiver im oberen Teil des Turms gebündelt abstrahlen. Im Receiver, der üblicherweise aus Rohrbündeln aufgebaut ist, wird ein Wärmeträgermedium erhitzt, das analog zum Parabolrinnenkraftwerk oder Fresnel-Kraftwerk via Wärmeüberträger Dampf zur Erzeugung elektrischer Energie produziert.

Wärmeträgermedien oder Wärmespeichermedien auf Basis anorganischer Salze sind schon lange bekannt. Sie werden üblicherweise bei so hohen Temperaturen verwendet, bei welchen Wasser bereits dampfförmig ist, also üblicherweise bei 100 °C und mehr.

Bekannte bei relativ hoher Temperatur verwendbare Wärmeträgermedien oder Wärmespeichermedien sind Zusammensetzungen, die Alkalimetall- und / oder Erdalkalimetallnitrate, gegebenenfalls auch in Mischung mit Alkalimetallnitriten und / oder Erdalkalimetallnitriten, enthalten. Ein Produkt der Coastal Chemical Company LLC mit der Zusammensetzung Kaliumnitrat: Natriumnitrat 40 Gew.-% : 60 Gew.-% wird beispielsweise weit verbreitet für die erste Inbetriebnahme sowie für den Dauerbetrieb von Solarthermiekraftwerken mit einer maximalen Arbeitstemperatur von über 500° C verwendet. Nitratsalzmischungen mit einem anderen molaren Natrium/Kalium-Verhältnis sind ebenfalls einsetzbar, unterscheiden sich im Wesentlichen nur leicht in den physikalischen Eigenschaften, beispielsweise in ihren Schmelzbereichen. Die Standardpublikation zur Errichtung und Betrieb von Solarthermie-Turmkraftwerken mit Nitratsalzmischungen ist Zavoico, A. B. (2001) in Solar Power Tower: Design Basis Document; SAND2001-2100. Sandia National Laboratories, San Francisco. Zavoiko gibt reine Kalium-Natrium-Nitratsalzmischungen als Referenz für diese Solarthermiekraftwerke als Wärmeträger- oder Wärmespeichermedium an.

Thomas Bauer et al., World Renewable Energy Forum, 2012, S. 1-8, gibt einen Überblick über thermische Energiespeichersysteme wieder, insbesondere über thermische Stabilitäten von kommerziell erhältlichen Nitrat/Nitrit-Mischungen.

Aus der US 7588694 B1 ist ein Wärmetransfermedium oder Wärmespeichermedium für Solarthermiekraftwerke mit einer Schmelztemperatur unter 100°C und einer thermischen Stabilität bis zu 500°C bekannt, das eine Mischung von 4 Nitratsalzen ($NaNO_3$, $KNO_3$, $LiNO_3$ und $Ca(NO_3)_2$) enthält.

EP 2975099 A1 offenbart ein Wärmeträger- oder Wärmespeichermedium für Solarthermiekraftwerke, das eine binäre Mischung aus Natriumnitrat und 60-75 Gew.-% Kaliumnitrat enthält, wobei durch die Zunahme an Kaliumnitrat in der Mischung bei hohen Temperaturen die Stabilität verbessert werden kann.

Solche Nitratsalzmischungen sind allerdings noch verbesserungsbedürftig, da beim Aufheizen dieser Nitratsalzmischungen große Mengen Zersetzungsgase anfallen können, was insbesondere in den Receiver-Röhren der Turmkraftwerke zu Risiken der Überhitzung durch gebildete Gaskavitäten in der Salzschmelze und somit vermindertem Wärmeabführung führen kann. Üblicherweise müssen die in solchen Solarthermiekraftwerken verwendeten großen Mengen Nitratsalzmischung sehr langsam und vorsichtig aufgeheizt werden, was den Inbetriebnahmeprozess verzögert und unwirtschaftlich ist. Darüber hinaus ist zu berücksichtigen, dass selbst bei moderaten Aufheizgeschwindigkeiten die genannten reinen Nitratsalzmischungen sich teilweise unter Sauerstoff und Stickstoffoxidabspaltung zersetzen.

Dabei führt die Entwicklung von großen Mengen an Sauerstoffgas auch zu einem zusätzlichen Abführen von Stickoxiden aus der Gasphase über der Salzschmelzenmischung in die Umgebung. Dieser auch "Strippeffekt" genannte Vorgang führt zur verstärkten Nitratsalzzersetzung unter Stickoxidgasbildung. Das hat zum einen den Nachteil, dass die Emissionen von Stickoxidgasen in die Umgebung verstärkt werden und andererseits die Korrosivitätsanstieg der Nitratsalzschmelzemischung beschleunigt wird.

Es ist aus D.A. Nissen und D.E. Meeker, Inorg. Chem. 1983, 22, 716-721 bekannt, dass eine Mischung aus Natriumnitrat und Kaliumnitrat bei hohen Temperaturen Sauerstoff abgibt.

Aufgabe der vorliegenden Erfindung war es, ein Wärmeträgermedium oder Wärmespeichermedium zu entwickeln, welches die Nachteile bekannter Nitratsalzzusammensetzungen beim Aufheizen während der ersten Inbetriebnahme diese Medien enthaltenden Vorrichtungen nicht hat.

Aus Rationalitätsgründen werden die in der Beschreibung und in den Ansprüchen definierten Vorrichtungen in welchen die Wärmeträger- oder Wärmespeichermedien enthalten sind, insbesondere ihre bevorzugten und besonders bevorzugten Ausführungsformen, zum Beispiel Kraftwerke zur Erzeugung von Wärme und/oder elektrischer Energie, Vorrichtungen der chemischen Verfahrenstechnik oder Metallhärteanlagen, hierin auch "erfindungsgemäße Wärmetransfervorrichtungen" genannt.

Demgemäß wurde das in den Ansprüchen definierte Verfahren gefunden.

Aus Rationalitätsgründen werden die in der Beschreibung und in den Ansprüchen definierten Nitratsalzzusammensetzungen, insbesondere ihre bevorzugten und besonders bevorzugten Ausführungsformen, im Folgenden auch "erfindungsgemäße Nitratsalzzusammensetzung" genannt.

Hierin ist unter Alkalimetall, Lithium, Natrium, Kalium, Rubidium, Cäsium, vorzugsweise Lithium, Natrium, Kalium, besonders bevorzugt Natrium, Kalium zu verstehen, es sei denn es ist ausdrücklich etwas anderes beschrieben.

Hierin ist unter Erdalkalimetall, Beryllium, Magnesium, Calcium, Strontium, Barium, vorzugsweise Calcium, Strontium, Barium, besonders bevorzugt Calcium und Barium zu verstehen, es sei denn es ist ausdrücklich etwas anderes beschrieben.

Die erfindungsgemäße Nitratsalzzusammensetzung Z enthält Z1 mindestens ein Alkalimetallnitrat und gegebenenfalls Erdalkalimetallnitrat sowie Z2 mindestens ein Alkalimetallnitrit und gegebenenfalls Erdalkalimetallnitrit als wesentliche Bestandteile.

Eine gut geeignete Ausführungsform der erfindungsgemäßen Nitratsalzzusammensetzung enthält als wesentliche Bestandteile ein Z 1 Alkalimetallnitrat und ein Z2 Alkalimetallnitrit.

Das Alkalimetallnitrat ist hierin ein Nitrat, vorzugsweise praktisch wasserfreies, besonders bevorzugt kristallwasserfreies, Nitrat der Metalle Lithium, Natrium, Kalium, Rubidium oder Cäsium, vorzugsweise Lithium, Natrium, Kalium, besonders bevorzugt Natrium, Kalium, allgemein als $MetNO_3$ beschrieben, wobei Met die voran beschriebenen Alkalimetalle bedeutet, wobei der Begriff Alkalimetallnitrat sowohl ein einzelnes Nitrat als auch Mischungen aus den Nitraten dieser Metalle einschließt, beispielsweise Kaliumnitrat plus Natriumnitrat.

Das Erdalkalimetallnitrat ist hierin ein Nitrat, vorzugsweise praktisch wasserfreies, besonders bevorzugt kristallwasserfreies, Nitrat der Metalle, Magnesium, Calcium, Strontium, Barium, vorzugsweise Calcium, Strontium, Barium, besonders bevorzugt Calcium und Barium, allgemein als $Met(NO_3)_2$ beschrieben, wobei Met die voran beschriebenen Erdalkalimetalle bedeutet, wobei der Begriff Erdalkalimetallnitrat sowohl ein einzelnes Nitrat als auch Mischungen aus den Nitraten dieser Metalle einschließt, beispielsweise Calciumnitrat plus Magnesiumnitrat.

Das Alkalimetallnitrit ist hierin ein Nitrit, vorzugsweise praktisch wasserfreies, besonders bevorzugt kristallwasserfreies, Nitrit der Alkalimetalle Lithium, Natrium, Kalium, Rubidium und Cäsium, vorzugsweise Lithium, Natrium, Kalium, besonders bevorzugt Natrium, Kalium, allgemein als $MetNO_2$ beschrieben, wobei Met die voran beschriebenen Alkalimetalle bedeutet. Das Alkalimetallnitrit kann als einzelne Verbindung aber auch als Gemisch verschiedener Alkalimetallnitrite, beispielsweise Natriumnitrit plus Kaliumnitrit, vorliegen.

Das Erdalkalimetallnitrit ist hierin ein Nitrit, vorzugsweise praktisch wasserfreies, besonders bevorzugt kristallwasserfreies, Nitrit der Metalle Magnesium, Calcium, Strontium, Barium, vorzugsweise Calcium, Strontium, Barium, besonders bevorzugt Calcium und Barium, allgemein als $Met(NO_2)_2$ beschrieben, wobei Met die voran beschriebenen Erdalkalimetalle bedeutet, wobei der Begriff Erdalkalimetallnitrit sowohl ein einzelnes Nitrit als auch Mischungen aus den Nitriten dieser Metalle einschließt, beispielsweise Calciumnitrit plus Magnesiumnitrit.

Bevorzugt sind folgende erfindungsgemäßen Nitratsalzzusammensetzungen:
Erfindungsgemäße Nitratsalzzusammensetzung enthaltend als wesentliche Bestandteile ein Z1 Alkalimetallnitrat ausgewählt aus der Gruppe bestehend aus Natriumnitrat und Kaliumnitrat und Z2 ein Alkalimetallnitrit;

Erfindungsgemäße Nitratsalzzusammensetzung enthaltend als wesentliche Bestandteile ein Z1 Alkalimetallnitrat und ein Z2 Alkalimetallnitrit ausgewählt aus der Gruppe bestehend aus Natriumnitrit und Kaliumnitrit;

Erfindungsgemäße Nitratsalzzusammensetzung enthaltend als wesentliche Bestandteile ein Z1 Alkalimetallnitrat ausgewählt aus der Gruppe bestehend aus Natriumnitrat und Kaliumnitrat und ein Z2 Alkalimetallnitrit ausgewählt aus der Gruppe bestehend aus Natriumnitrit und Kaliumnitrit.

Die Nitratsalzzusammensetzung Z enthält das mindestens ein Alkalimetallnitrit und gegebenenfalls Erdalkalimetallnitrit Z2 in einer Menge im Bereich von 1,1 bis 15,0 mol %, bezogen auf die Summe der Komponenten Z1 plus Z2, wobei sich diese Menge ausdrücklich auch auf die oben angegebenen bevorzugten Nitratsalzzusammensetzungen bezieht.

Die erfindungsgemäße Nitratsalzzusammensetzung Z wird bei einer Temperatur im Bereich von 500 bis 620 °C, vorzugsweise im Bereich von 550 bis 580 °C eingesetzt und bei einem Sauerstoffpartialdruck über der erfindungs-

gemäßen Nitratsalzzusammensetzung $pO_2$ im Bereich von 0,1 bis 1,0 atm, vorzugsweise im Bereich von 0,2 bis 0,4 atm, besonders bevorzugt im Bereich von 0,21 bis 0,35 atm.

Der Gehalt an Komponente Z2 der erfindungsgemäßen Nitratsalzzusammensetzung Z richtet sich vorzugsweise nach der aus dem oben definierten Bereich ausgewählten gewünschten Temperatur und nach dem aus dem oben definierten Bereich ausgewählten Sauerstoffpartialdruck $pO_2$ und wird näherungsweise mit folgender Formel berechnet in welcher die Variablen die folgende Bedeutung haben:

$$x_{Nitrit} = \frac{K_6(T)}{K_6(T) + \sqrt{P_{O2}}}$$

$X_{Nitrit}$ ist der Molenbruch von Nitrit in einer Nitrit/Nitrat-Mischung,
$K_6(T)$ ist die temperaturabhängige Gleichgewichtskonstante der Reaktion Nitrat $\leftrightarrows$ Nitrit + ½ Sauerstoff ($NO_3^- \leftrightarrows NO_2^- + \frac{1}{2} O_2$), die Werte von $K_6(T)$ sind beispielsweise D.A. Nissen und D.E. Meeker, Inorg. Chem. 1983, 22, 716-721 entnehmbar, $pO_2$ ist der Sauerstoffpartialdruck und T ist die Temperatur der erfindungsgemäßen Nitratsalzzusammensetzung.

Gegebenenfalls wird der errechnete Wert der molaren Konzentration der Komponente Z2 um 40 %, vorzugsweise 20 % vermindert oder um 20 %, vorzugsweise 10 % erhöht.

Bevorzugt wird die molare Konzentration der Komponente Z2 wie aus der obigen Formel errechnet verwendet.

Es ist jedoch beispielsweise möglich, dass eine bestimmte Menge des in den erfindungsgemäßen Nitratsalzusammensetzungen vorhandenen Nitrates bei der ersten Inbetriebnahme zu Nitrit reduziert wird. Beispielsweise durch a) folgende Reduktionen: Passivierung der mit der erfindungsgemäßen Nitratsalzmischung in Berührung kommenden Metallteile, Fillermaterialien oder b) Erzeugung einer gewünschten erhöhten Sauerstoffkonzentration gegenüber Umgebungsluft durch Nitratsalzzersetzung. In diesen Fällen empfiehlt es sich die errechnete Nitritmenge Z2 um einen bestimmten Betrag zu vermindern.

Beispiele für den Anteil der Komponente Z2 in mol % in der Mischung Z für bestimmte WertePaare Temperatur/Sauerstoffpartialdruck sind im Folgenden dargestellt und basieren auf obiger Formel:

| Temperatur | Partialdruck von Sauerstoff | | | | | |
|---|---|---|---|---|---|---|
| T/°C | 0.2 | 0.25 | 0.3 | 0.35 | 0.4 | p/atm |
| 500 | 1.6 | 1.4 | 1.3 | 1.2 | 1.1 | mol % [1] |
| 505 | 1.8 | 1.6 | 1.5 | 1.4 | 1.3 | mol % |
| 510 | 2.0 | 1.8 | 1.6 | 1.5 | 1.4 | mol % |
| 515 | 2.2 | 2.0 | 1.8 | 1.7 | 1.6 | mol % |
| 520 | 2.5 | 2.2 | 2.0 | 1.9 | 1.8 | mol % |
| 525 | 2.8 | 2.5 | 2.3 | 2.1 | 2.0 | mol % |
| 530 | 3.1 | 2.7 | 2.5 | 2.3 | 2.2 | mol % |
| 535 | 3.4 | 3.0 | 2.8 | 2.6 | 2.4 | mol % |
| 540 | 3.7 | 3.3 | 3.1 | 2.8 | 2.7 | mol % |
| 545 | 4.1 | 3.7 | 3.4 | 3.1 | 2.9 | mol % |
| 550 | 4.5 | 4.1 | 3.7 | 3.5 | 3.2 | mol % |
| 555 | 5.0 | 4.5 | 4.1 | 3.8 | 3.6 | mol % |
| 560 | 5.5 | 4.9 | 4.5 | 4.2 | 3.9 | mol % |
| 565 | 6.0 | 5.4 | 4.9 | 4.6 | 4.3 | mol % |
| 570 | 6.5 | 5.9 | 5.4 | 5.0 | 4.7 | mol % |
| 575 | 7.2 | 6.4 | 5.9 | 5.5 | 5.2 | mol % |
| 580 | 7.8 | 7.0 | 6.5 | 6.0 | 5.6 | mol % |
| 585 | 8.5 | 7.7 | 7.0 | 6.6 | 6.2 | mol % |

(fortgesetzt)

| Temperatur | Partialdruck von Sauerstoff | | | | | |
|---|---|---|---|---|---|---|
| T/°C | 0.2 | 0.25 | 0.3 | 0.35 | 0.4 | p/atm |
| 590 | 9.2 | 8.3 | 7.7 | 7.1 | 6.7 | mol % |
| 595 | 10.0 | 9.1 | 8.3 | 7.8 | 7.3 | mol % |
| 600.0 | 10.8 | 9.8 | 9.0 | 8.4 | 7.9 | mol % |
| 605.0 | 11.7 | 10.6 | 9.79 | 9.1 | 8.6 | mol % |
| 610.0 | 12.7 | 11.5 | 10.6 | 9.9 | 9.3 | mol % |
| 615.0 | 13.7 | 12.4 | 11.4 | 10.7 | 10.1 | mol % |
| 620.0 | 14.7 | 13.3 | 12.3 | 11.5 | 10.9 | mol % |
| [1] Konzentration an Nitrit Z2 in der Nitratsalzzusammensetzung Z | | | | | | |

Neben den genannten wesentlichen Komponenten kann die erfindungsgemäße Nitratsalzzusammensetzung Z noch kleine Konzentrationen von weiteren Bestandteilen enthalten, beispielsweise basische Verbindungen ausgewählt aus der Gruppe bestehend aus (i) Alkalimetalloxid $Met_2O$, worin Met vorzugsweise Natrium und/oder Kalium bedeuten, (ii) Alkalimetallcarbonat, vorzugsweise Natriumcarbonat, (iii) Alkalimetallverbindung, die im Temperaturbereich von 250°C bis 600°C zu Alkalimetalloxid oder Alkalimetallcarbonat zerfällt, (iv) Alkalimetallhydroxid MetOH, in welchem Met vorzugsweise Natrium und/oder Kalium bedeuten, (v) Alkalimetallperoxid $Met_2O_2$, in welchem Met vorzugsweise Natrium und/oder Kalium bedeuten und (vi)) Alkalimetallsuperoxid $MetO_2$, in welchem Met vorzugsweise Natrium und/oder Kalium bedeuten, in einer Gesamtmenge der Basenäquivalente im Bereich von 0,0001 bis 1 mol %, vorzugsweise im Bereich von 0,001 bis 0,05 mol %, jeweils bezogen auf die Nitratsalzzusammensetzung Z. Üblicherweise werden bei höheren Temperaturen geringere Konzentrationen von Basenäquivalenten angewendet als bei niedrigeren Temperaturen.
Die Summe aller Bestandteile der erfindungsgemäßen Nitratsalzzusammensetzung Z ist 100 mol %.
Die erfindungsgemäße Nitratsalzzusammensetzung Z wird als Wärmeträger- oder Wärmespeichermedium bei der ersten Inbetriebnahme der erfindungsgemäßen Wärmetransfervorrichtungen, vorzugsweise von Solarthermiekraftwerken oder Salzbadreaktoren, besonders bevorzugt von Turmkraftwerken, auf eine maximale Betriebstemperatur im Bereich von 500 bis 620°C, vorzugsweise im Bereich von 550 bis 580°C erhitzt.
Die erfindungsgemäße Nitratsalzzusammensetzung geht bei einer Temperatur oberhalb ca. 100 bis 300°C, unter anderem abhängig vom Nitritgehalt und dem Verhältnis der die Mischung bildenden Kationen, in die geschmolzene und üblicherweise pumpbare Form über.
Bei der ersten Inbetriebnahme der erfindungsgemäßen Wärmetransfervorrichtungen wird üblicherweise die frische, das heißt noch nicht auf eine Temperatur im Bereich von 500 bis 620°C erhitzte, erfindungsgemäße Nitratsalzzusammensetzung Z, üblicherweise in einer mit Heiz- und Aufbrechvorrichtung versehenen Aufschmelzapparatur, die üblicherweise separat angeordnet aber mit einem Wärmespeicherbehälter des Solarthermiekraftwerks verbunden ist, gemischt und durch langsames Erhitzen aufgeschmolzen und als Schmelze in die erfindungsgemäße Wärmetransfervorrichtung gefüllt.
Die Aufschmelztemperatur liegt üblicherweise im Bereich von 220 bis 350°C und ist im Allgemeinen nicht hoch genug, um eine erhebliche Zersetzung der erfindungsgemäßen Nitratsalzzusammensetzung zu bewirken.
Die erfindungsgemäßen Wärmetransfervorrichtungen werden dann mit dieser Schmelze beaufschlagt. Bei der ersten Inbetriebnahme der erfindungsgemäßen Wärmetransfervorrichtungen wird diese Schmelze dann auf die maximale Betriebstemperatur im Bereich von 500 bis 620°C erhitzt.
Durch Verwendung der erfindungsgemäßen Nitratsalzzusammensetzung können die genannten Nachteile bei einer üblichen Erstinbetriebnahme vermieden werden. Die erste Inbetriebnahme der erfindungsgemäßen Wärmetransfervorrichtung kann so gestaltet werden, dass die Gasphase über einem Teil der Oberfläche oder über der gesamten Oberfläche der erfindungsgemäßen Nitratsalzzusammesetzung (a) mit der Umgebungsluft im Austausch steht, was hierin oder in der Fachwelt auch als "offene Fahrweise" bezeichnet wird oder (b) ohne Austausch mit der Umgebungsluft steht, auch als "geschlossene Fahrweise" bezeichnet.
In einer offenen Fahrweise erreicht der Partialdruck von Sauerstoff über der Salzschmelze am Ende der Inbetriebnahme einen Wert von 0.21 atm. In einer geschlossenen Fahrweise kann der gewünschte Sauerstoffpartialdruck über der Nitratsalzzusammensetzung eingestellt werden. Beispielsweise kann der Sauerstoffpartialdruck so gewählt werden, dass er im Bereich von 0,2 bis 0,4 atm liegt.
Eine bevorzugte Ausführungsform der ersten Inbetriebnahme der erfindungsgemäßen Wärmetransfervorrichtungen ist im Folgenden beschrieben.

Eine bevorzugte Wärmetransfervorrichtung ist ein Solarthermiekraftwerk, besonders bevorzugt enthaltend Wärmespeicher zur Aufnahme der erfindungsgemäßen Nitratsalzzusammensetzung unterschiedlicher Temperatur.

Der Wärmespeicher besteht in einer Variante üblicherweise aus mindestens zwei, vorzugsweise aus zwei großen Behältern, in der Regel einem kälteren und einem heißeren Behälter (auch als "Zwei-Tank-Speicher" bezeichnet). Die erfindungsgemäße Nitratsalzzusammensetzung, vorzugsweise im geschmolzenen Zustand, beispielsweise als pumpbare Flüssigkeit, wird üblicherweise dem kälteren Behälter des Solarthermiekraftwerks entnommen und zum Beispiel im Solarfeld einer Parabolrinnenanlage oder in einem Turm-Receiver eines Turmkraftwerks erhizt. Die so erhizte heißere geschmolzene Salzmischung wird üblicherweise in den heißen Behälter geführt und dort so lange aufbewahrt, bis Bedarf zur Erzeugung elektrischer Energie besteht. Eine andere Variante eines Wärmespeichers, der sogenannte Schichtenspeichers, besteht aus einem Behälter, in dem das Wärmespeichermedium in unterschiedlichen Temperaturen geschichtet aufbewahrt wird. Beim Einspeichern wird aus seinem kalten Bereich Material entnommen. Das Material wird erhitzt und in dessen heißen Bereich zurückgespeichert. Der Schichtenspeicher wird also weitgehend analog zu einem Zwei-Tank-Speicher verwendet. In thermoklinen Speichen werden auch feste Füllmaterialien als Wärmespeichermedien in Schichtenspeichern eingesetzt. Auch thermokline Speicher werden analog zu Zwei-Tank-Speichern genutzt.

Ein Beispiel für ein solches Solarthermiekraftwerk ist in Figur 1 dargestellt. Bei der ersten Inbetriebnahme eines solchen Solarthermiekraftwerks werden im allgemeinen der kältere Wärmespeicher-Behälter des Solarthermiekraftwerks sowie die übrigen die erfindungsgemäße Nitratsalzzusammensetzung führenden Teile des Solarthermiekraftwerks, üblicherweise knapp oberhalb der Aufschmelztemperatur, mit der erfindungsgemäßen frischen Nitratsalzzusammensetzung bis zu einem gewissen Füllstand befüllt. Dabei werden die von der erfindungsgemäßen Nitratsalzzusammensetzung berührten Teile des Kraftwerkes so hoch vorgeheizt, beispielsweise mit elektrischen Heizern oder Gasbrennern, dass bei Berührung der Salzschmelze mit Anlagenteilen es zu keiner verfahrenstechnisch störenden Feststoffbildung kommt.

Sind nutzbare Mengen erfindungsgemäße Nitratsalzzusammensetzung eingefüllt und aufgeschmolzen kann auch Sonnenenergie zum weiteren Salzaufschmelzen eingesetzt werden, indem die Salzschmelze über Solarreceiver deutlich über den Schmelzbereich hinaus weiter erhitzt wird. In einer solchen Schmelze ist Wärmeenergie gespeichert, die zum Aufschmelzen weiterer Salzmengen genutzt werden kann.

Ist die Sollmenge an erfindungsgemäßer Nitratsalzzusammensetzung vollständig aufgeschmolzen kann die Inbetriebnahme des Solarthermiekraftwerks weiter voranschreiten. Dabei wird die erfindungsgemäße Nittratzusammensetzung über bzw. durch die Receiver des Solarthermiekraftwerks geführt und erhitzt. Dabei erreicht sie die gewünschte maximale Betriebstemperatur im Bereich von 500 bis 620°C.

Die erste Inbetriebnahme des Solarthermiekraftwerks ist in der Regel dann abgeschlossen sobald die erfindungsgemäße Nitratsalzzusammensetzung Z als Wärmeträger- bzw. speichermedium auf die gewünschte Betriebstemperatur im Bereich von 500 bis 620°C gebracht wurde und das Solarthermiekraftwerk seine bestimmungsgemäße Tätigkeit im laufenden Betrieb aufnimmt ohne dass sich durch Sauerstoffabgabe die Zusammensetzung der Nitratsalzschmelze wesentlich ändert. Dieser Vorgang ist deutlich kürzer als das bisherige Inbetriebnahmeprozedere, das üblicherweise bis zu einigen Monaten dauert.

Beispiele für solche Solarthermiekraftwerke sind Parabolrinnenkraftwerke, Fresnel-Kraftwerke und vorzugsweise Turmkraftwerke.

In einer gut geeigneten Ausführungsform werden die erfindungsgemäßen Nitratsalzzusammensetzungen, vorzugsweise im geschmolzenen Zustand, beispielsweise als pumpbare Flüssigkeit, entweder als Wärmeträgermedium oder als Wärmespeichermedium in den solarthermischen Kraftwerken, beispielsweise den Parabolrinnenkraftwerken, den Fresnel-Kraftwerken oder vorzugsweise Turmkraftwerken verwendet.

In einer weiteren gut geeigneten Ausführungsform werden die erfindungsgemäßen Nitratsalzzusammensetzungen, vorzugsweise im geschmolzenen Zustand, beispielsweise als pumpbare Flüssigkeit, sowohl als Wärmeträgermedium als auch als Wärmespeichermedium in den Solarthermiekraftwerken, beispielsweise den Parabolrinnenkraftwerken, den Fresnel-Kraftwerken oder vorzugsweise den Turmkraftwerken verwendet, diese Betriebsvariante wird in der Fachwelt auch "Direct Molten Salt", DMS genannt.

Beispielsweise werden die erfindungsgemäßen Nitratsalzzusammensetzungen, vorzugsweise im geschmolzenen Zustand, beispielsweise als pumpbare Flüssigkeit, in Turmkraftwerken als Wärmeträgermedium und / oder als Wärmespeichermedium, besonders bevorzugt als Wärmeträgermedium, verwendet.

Bei der Verwendung der erfindungsgemäßen Nitratsalzzusammensetzungen, vorzugsweise im geschmolzenen Zustand, beispielsweise als pumpbare Flüssigkeit, als Wärmeträgermedium in den solarthermischen Kraftwerken, beispielsweise den Parabolrinnenkraftwerken, den Turmkraftwerken, den Fresnel-Kraftwerken, werden die Wärmeträgermedien durch solar erhitzte Rohre geführt. Dabei führen sie die dort entstehende Wärme üblicherweise zu einem Wärmespeicher oder zum Wärmeüberträger des Dampferhitzers eines Kraftwerkes.

Dann wird die heiße erfindungsgemäße Nitratsalzzusammensetzung im geschmolzenen Zustand, beispielsweise als pumpbare Flüssigkeit, üblicherweise dem heißeren Behälter des Wärmespeichers oder dem heißeren Bereich des Schichtenspeichers entnommen und zum Dampferzeuger eines Dampfkraftwerkes gepumpt. Der dort erzeugte, auf über 100 bar gespannte Dampf treibt in der Regel eine Turbine und einen Generator an der elektrische Energie an das Elektrizitätsnetz abgibt.

Am Wärmeüberträger (Salz-Dampf) wird die erfindungsgemäße Nitratsalzzusammensetzung im geschmolzenen Zustand, beispielsweise als pumpbare Flüssigkeit, in der Regel auf ca. 290°C abgekühlt und üblicherweise zurück in den kälteren Behälter des Wärmespeichers oder den kälteren Teil des Schichtenspeichers geführt. Beim Übertragen von Wärme von den solar erhitzten Rohren zum Speicher oder zum Dampferzeuger arbeitet die erfindungsgemäße Nitratsalzzusammensetzung in geschmolzener Form als Wärmeträgermedium. Eingefüllt in den Wärmespeicherbehälter arbeitet dieselbe erfindungsgemäße Nitratsalzzusammensetzung als Wärmespeichermedium, um beispielsweise bedarfsgeführte Erzeugung elektrischer Energie zu ermöglichen.

Die erfindungsgemäße Nitratsalzzusammensetzung, vorzugsweise in geschmolzener Form, findet aber auch Verwendung, als Wärmeträgermedium und / oder Wärmespeichermedium, vorzugsweise Wärmeträgermedium, in der chemischen Verfahrenstechnik, beispielsweise zur Beheizung von Reaktionsapparaturen chemischer Produktionsanlagen, wo in der Regel ein sehr hoher Wärmestrom bei sehr hohen Temperaturen mit engen Schwankungsbreiten übertragen werden muss. Beispiele hierfür sind Salzbadreaktoren. Beispiele für die genannten Produktionsanlagen sind Acrylsäureanlagen oder Anlagen zur Herstellung von Melamin.

Gegenstand der vorliegenden Erfindung ist ein Verfahren zur ersten Inbetriebnahme einer Vorrichtung in welcher ein Wärmeträger- oder Wärmespeichermedium bei einer Temperatur im Bereich von 500 bis 620°C und einem Sauerstoffpartialdruck über der Nitratsalzzusammensetzung im Bereich von 0,1 bis 1,0 atm verwendet werden in dem man das Wärmeträger- oder Wärmespeichermedium in die Vorrichtung einfüllt und mit einer Wärmequelle aufheizt dadurch gekennzeichnet, dass das Wärmeträger- oder Wärmespeichermedium eine Nitratsalzzusammensetzung Z enthaltend Z1 mindestens ein Alkalimetallnitrat und gegebenenfalls Erdalkalimetallnitrat sowie Z2 mindestens ein Alkalimetallnitrit und gegebenenfalls Erdalkalimetallnitrit in einer Menge von Z2 im Bereich von 1,1 bis 15,0 mol % bezogen auf die Summe Z1 plus Z2 enthält und, dass für eine aus oben genanntem Bereich ausgewählte gewünschte Temperatur und für einen aus oben genanntem Bereich ausgewählten gewünschten Sauerstoffpartialdruck die molare Menge des Alkalimetallnitrits und gegebenenfalls Erdalkalimetallnitrits mit folgender Formel berechnet wird:

$$x_{Nitrit} = \frac{K_6(T)}{K_6(T) + \sqrt{P_{O2}}}$$

worin die Variablen die oben genannte Bedeutung haben und man gegebenenfalls den errechneten Wert der molaren Konzentration der Komponente Z2 um 40 % vermindert oder um 20 % erhöht.

Im Übrigen gelten für die Merkmale letzteren Gegenstands der vorliegenden Erfindung ausdrücklich die in der vorliegenden Beschreibung und den Unteransprüchen beschriebenen bevorzugten Ausführungsformen.

Vorteil der erfindungsgemäßen Nitratsalzzusammensetzung und deren Verwendung bei der ersten Inbetriebnahme der erfindungsgemäßen Wärmetransfervorrichtungen, vorzugseise Solarthermiekraftwerke, insbesondere Turmkraftwerke, ist, dass das Hochheizen der erfindungsgemäßen Nitratsalzzusammensetzung auf maximale Betriebstemperatur (a) schneller als mit Nitratsalzmischungen des Standes der Technik geht und (b) nicht mit der Entwicklung großer Mengen an Gasen, insbesondere Sauerstoff verbunden ist und somit beispielsweise das Risiko der Beschädigung von Solar-Receivern von Solarthermiekraftwerken, insbesondere Turmkraftwerken durch Überhitzung vermindert wird und (c) eine Stickoxid-Emission in die Umwelt unterdrückt oder vermindert wird. Ein weiterer Vorteil (d) der erfindungsgemäßen Nitratsalzmischung ist, dass eine geringere Salzmenge als nach dem Stand der Technik üblich in die entsprechenden Vorrichtungen, beispielsweise Solarthermiekraftwerke, eingefüllt werden kann, weil die Zersetzung der Salzmischung und somit deren Mengenverringerung zurückgedrängt ist.

**Patentansprüche**

1. Verfahren zur ersten Inbetriebnahme einer Vorrichtung in welcher ein Wärmeträger- oder Wärmespeichermedium bei einer Temperatur im Bereich von 500 bis 620 °C und einem Sauerstoffpartialdruck über der Nitratsalzzusammensetzung im Bereich von 0,1 bis 1,0 atm verwendet werden, indem man das Wärmeträger- oder Wärmespeichermedium in die Vorrichtung einfüllt und mit einer Wärmequelle aufheizt, **dadurch gekennzeichnet, dass** das Wärmeträger- oder Wärmespeichermedium eine Nitratsalzzusammensetzung Z enthaltend Z1 mindestens ein Alkalimetallnitrat und gegebenenfalls Erdalkalimetallnitrat sowie Z2 mindestens ein Alkalimetallnitrit und gegebenenfalls Erdalkalimetallnitrit in einer Menge von Z2 im Bereich von 1,1 bis 15,0 mol % bezogen auf die Summe Z1 plus Z2 enthält und, dass für eine aus oben genanntem Bereich ausgewählte gewünschte Temperatur und für einen aus oben genanntem Bereich ausgewählten gewünschten Sauerstoffpartialdruck die molare Menge des Alkalimetallnitrits und gegebenenfalls Erdalkalimetallnitrits mit folgender Formel berechnet wird

$$x_{Nitrit} = \frac{K_6(T)}{K_6(T) + \sqrt{P_{O2}}}$$

in welcher die Variablen die folgende Bedeutung haben

$X_{Nitrit}$ ist der Molenbruch von Nitrit in einer Nitrit/Nitrat-Mischung,

K6(T) ist die temperaturabhängige Gleichgewichtskonstante der Reaktion Nitrat $\leftrightarrows$ Nitrit + ½ Sauerstoff ($NO_3^-$ $\leftrightarrows$ $NO_2^-$ + ½ $O_2$), $pO_2$ ist der Sauerstoffpartialdruck und T ist die Temperatur der Nitratsalzzusammensetzung und man gegebenenfalls den errechneten Wert der molaren Konzentration der Komponente Z2 um 40 % vermindert oder um 20 % erhöht.

2. Verfahren gemäß Anspruch 1, wobei das Wärmeträger- und/oder Wärmespeichermedium in Kraftwerken zur Erzeugung von Wärme und/oder elektrischer Energie oder in der chemischen Verfahrenstechnik eingesetzt wird.

3. Verfahren gemäß Anspruch 1 oder 2, wobei die Kraftwerke zur Erzeugung von Wärme und/oder elektrischer Energie Solarthermiekraftwerke sind.

4. Verfahren gemäß Anspruch 3, wobei die Solarthermiekraftwerke solche des Typs Turmkraftwerk sind.

5. Verfahren gemäß Anspruch 3 oder 4, wobei die Solarthermiekraftwerke mindestens zwei Wärmespeicherbehälter zur Aufnahme von Nitratsalzzusammensetzungen Z unterschiedlicher Temperatur, wie in Anspruch 1 definiert, enthalten.

## Claims

1. A process for the first start-up of an apparatus in which a heat transfer or heat storage medium is used at a temperature in the range from 500 to 620°C and an oxygen partial pressure over the nitrate salt composition in the range from 0.1 to 1.0 atm by introducing the heat transfer or heat storage medium into the apparatus and heating it up by means of a heat source, wherein the heat transfer or heat storage medium comprises a nitrate salt composition Z comprising Z1 at least one alkali metal nitrate and optionally alkaline earth metal nitrate and also Z2 at least one alkali metal nitrite and optionally alkaline earth metal nitrite in an amount of Z2 in the range from 1.1 to 15.0 mol% based on the sum Z1 plus Z2 and the molar amount of the alkali metal nitrite and optionally alkaline earth metal nitrite for a desired temperature selected from the range indicated above and for a desired oxygen partial pressure selected from the range indicated above is calculated by means of the following formula:

$$x_{nitrite} = \frac{K_6(T)}{K_6(T) + \sqrt{P_{O2}}}$$

where the variables have the following meanings:

$X_{nitrite}$ is the mole fraction of nitrite in a nitrite/nitrate mixture,

$K_6(T)$ is the temperature-dependent equilibrium constant of the reaction nitrate $\leftrightarrows$ nitrite + ½ oxygen ($NO_3^-$ $\leftrightarrows$ $NO_2^-$ + ½ $O_2$), $pO_2$ is the oxygen partial pressure and T is the temperature of the nitrate salt composition, and the calculated value of the molar concentration of the component Z2 is optionally reduced by 40% or increased by 20%.

2. The process according to claim 1, wherein the heat transfer and/or heat storage medium is used in power stations for generating heat and/or electric energy or in chemical process engineering.

3. The process according to claim 1 or 2, wherein the power stations for generating heat and/or electric energy are solar-thermal power stations.

4. The process according to claim 3, wherein the solar-thermal power stations are of the tower power station type.

5. The process according to claim 3 or 4, wherein the solar-thermal power stations comprise at least two heat storage vessels for accommodating nitrate salt compositions Z at different temperatures, as defined in claim 1.

**Revendications**

1. Procédé pour la première mise en service d'un dispositif dans lequel on utilise un milieu caloporteur ou accumulateur de chaleur à une température dans la plage de 500 à 620 °C et sous une pression partielle d'oxygène, au-dessus de la composition de sels nitrates, dans la plage de 0,1 à 1,0 atm, dans lequel on introduit le fluide caloporteur ou accumulateur de chaleur dans le dispositif et on le chauffe avec une source de chaleur, **caractérisé en ce que** le milieu caloporteur ou accumulateur de chaleur contient une composition Z de sels nitrates contenant Z1 au moins un nitrate d'un métal alcalin et éventuellement un nitrate d'un métal alcalino-terreux ainsi que Z2 au moins un nitrite d'un métal alcalin et éventuellement un nitrite d'un métal alcalino-terreux en une quantité de Z2 dans la plage de 1,1 à 15,0 % en moles par rapport à la somme Z1 plus Z2, et **en ce que**, pour une température souhaitée choisie dans la plage mentionnée ci-dessus et pour une pression partielle d'oxygène souhaitée choisie dans la plage mentionnée ci-dessus, la quantité en moles du nitrite d'un métal alcalin et éventuellement du nitrite d'un métal alcalino-terreux est calculée par la formule suivante :

$$x_{Nitrit} = \frac{K_6(T)}{K_6(T) + \sqrt{P_{O2}}}$$

dans laquelle les variables ont les significations suivantes :

$x_{Nitrit}$ représente la fraction molaire du nitrite dans un mélange nitrite/nitrate,
$K_6(T)$ représente la constante à l'équilibre, dépendant de la température, de la réaction nitrate $\leftrightarrows$ nitrite + ½ oxygène ($NO_3 \leftrightarrows NO_2$ + ½ $O_2$), $pO_2$ représente la pression partielle d'oxygène et T la température de la composition de sels nitrates,
et éventuellement qu'on diminue de 40 % ou augmente de 20 % la valeur calculée de la concentration molaire du composant Z2.

2. Procédé selon la revendication 1, dans lequel le milieu caloporteur et/ou accumulateur de chaleur est utilisé dans des centrales pour la production de chaleur et/ou d'énergie électrique, ou dans la technique des procédés chimiques.

3. Procédé selon la revendication 1 ou 2, dans lequel les centrales pour la production de chaleur et/ou d'énergie électrique sont des centrales solaires.

4. Procédé selon la revendication 3, dans lequel les centrales thermiques sont du type centrale à tour.

5. Procédé selon la revendication 3 ou 4, dans lequel les centrales thermiques contiennent au moins deux réservoirs d'accumulateur de chaleur destinés à recevoir des compositions de sels nitrates Z ayant des températures différentes, comme défini dans la revendication 1.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7588694 B1
- EP 2975099 A1

**In der Beschreibung aufgeführte Nicht-Patentliteratur**

- **ZAVOICO, A. B.** Solar Power Tower: Design Basis Document. Sandia National Laboratories, 2001, SAND2001-2100
- **THOMAS BAUER et al.** *World Renewable Energy Forum,* 2012, 1-8
- **D.A. NISSEN ; D.E. MEEKER.** *Inorg. Chem.,* 1983, vol. 22, 716-721